# EUROPEAN PATENT APPLICATION

(11) **EP 4 712 365 A1**
(43) Date of publication of application: **18.03.2026**
(21) Application number: 25196693.3
(22) Date of filing: 19.08.2025
(51) Int. Cl.: H04B 10/112

(54) **FREE SPACE OPTICAL COMMUNICATIONS TERMINAL**

(30) Priority: 17.09.2024 GB 202413671
(71) Applicant: Airbus Operations Limited, Bristol BS34 7PA (GB)
(72) Inventor: QUINTANA SANCHEZ, Crisanto, Bristol, BS34 7PA (GB); ERRY, Gavin, Bristol, BS34 7PA (GB); THUEUX, Yoann, Bristol, BS34 7PA (GB)
(74) Representative: EIP

(57) **Abstract**

Disclosed is a free-space optical communications (FSO) terminal comprising: a first arm addressing a first port of a beamsplitter and comprising a first component configured to transmit a diverging first transmitted beam and/or utilise a first received beam; a second arm addressing a second port of the beamsplitter and comprising a second component configured to transmit a diverging second transmitted beam and/or utilise a second received beam; and a third arm addressing the third port of the beamsplitter and comprising a pointing unit configured to steer the first and/or second transmitted beam to a target and/or the first and/or second received beam received from a target. The third arm comprises an optical element to collimate transmitted beams to provide a collimated transmitted beam to the pointing unit, and focus received beams so as to provide a converging beam to the first/second arm. A method of beam steering is also disclosed.

## Description

### TECHNICAL FIELD

The present invention relates to free space optical communications terminals.

### BACKGROUND

Free space optical (FSO) communications use light propagating in free space to transmit data. In the context of FSO communications, 'free space' refers to, for example, air, space, vacuum, or similar and is in contrast with communications via solids such as a fibre-optic cable. FSO communications ordinarily rely on direct line of sight between transmitter and receiver and so rely on directing an optical beam between FSO communications terminals. FSO communications can offer higher data rates and improved security as compared to other wireless communications techniques. For example, FSO communications can achieve higher data rates, and can be less susceptible to jamming and interception compared to radio frequency (RF) communications. FSO communications can be useful for example in cases where communication via physical connections, such as fibre optic cables or other data cables, is impractical. One such case is, for example, communications between an aircraft and ground-based terminal.

It is desirable to allow for a reduction in the size, weight, and power (SWaP) requirements of a FSO communications terminal.

### SUMMARY

A first aspect of the present invention provides a free-space optical communications (FSO) terminal. The terminal comprises a beamsplitter having a first, second, and third port; a first arm addressing the first port of the beamsplitter and comprising a first component configured to transmit a diverging first transmitted beam and/or utilise a first received beam, a second arm addressing the second port of the beamsplitter and comprising a second component configured to transmit a diverging second transmitted beam and/or utilise a second received beam, and a third arm addressing the third port of the beamsplitter and comprising a pointing unit configured to steer the first and/or second transmitted beam to a target and/or the first and/or second received beam received from the target. A first optical path is from the first component to the pointing unit via the beamsplitter, and a second optical path is from the second component to the pointing unit via the beamsplitter. The third arm comprises an optical element positioned along the first and second optical paths, the optical element configured to collimate the diverging first transmitted beam and/or the diverging second transmitted beam incident thereupon so as to provide a collimated transmitted beam to the pointing unit, and focus the first and/or second received beam from the pointing unit so as to provide a converging beam to the first arm and/or second arm.

The free-space optical communications terminal according to the first aspect is able to use an optical element positioned in the third arm to provide focussing and/or collimating functions for received and/or transmitted beams of both the first and second arms. Accordingly, in comparison to FSO terminals which use optical elements in each arm, the FSO terminal can have reduced weight. Similarly, the FSO terminal of the first aspect can be more compact, since focussing of a received beam into the first or second arm is performed at a position in the third arm, or collimation of a diverging transmitted beam from the first or second arm occurs in the third arm. This can facilitate a reduced length of the first or second arm, compared with FSO terminals using an equivalent optical element in the first and/or second arm, for example, since the focussing length of the optical element is distributed between the first and/or second and the third arm.

In some examples, the free-space optical communications terminal is configured such that it operates in an entirely transmitting manner, whereby components in the first arm and second arm are configured to transmit diverging beams. In other examples, the free-space optical communications terminal is configured such that it operates in an entirely receiving manner, whereby components in the first arm and second arm are configured to receive converging beams. In yet further examples, the free-space optical communications terminal comprises both transmitting and receiving components in the first and second arms. In all cases, the free-space optical communications terminal can have a reduced size and weight, as described previously.

An "arm", as used herein, describes one or more optical components which receive, transmit or otherwise handle a common optical beam. An arm "addressing" the beamsplitter, as used herein, means that the optical components of the arm are optically coupled to the beamsplitter such that light, when present, can travel between the beamsplitter and the optical components of the arm. It will be appreciated that when no light is present, such as a transmitted beam or received beam, that an arm can still be considered to address the beamsplitter.

The optical element is, generally, operable to focus or collimate a beam. In some examples, the optical element may be a bulk optic lens, for example. In other examples, the optical element may be a spatial light modulator (SLM) or metamaterial lens.

Optionally, the beamsplitter is substantially planar. A substantially planar beamsplitter has a thickness, in the direction of an incident beam, which is relatively small compared with dimensions defining a receiving surface upon which the beam is incident. The substantially planar beamsplitter may be a plate beamsplitter, for example, which may be formed by a plate of glass or crystalline material, for example. In some examples, a substantially planar metamaterial surface may be used. A diverging or converging beam transmitted through a planar beamsplitter, such as a plate beamsplitter, which has a reduced thickness compared with a cubic beamsplitter, for example, may be less susceptible to aberrations, such as spherical aberration. In some examples, chromatic aberrations may also be reduced. This can improve performance of the FSO terminal by improving beam quality, which can in turn lead to improved optical coupling, for example.

Optionally, the beamsplitter is a pellicle beamsplitter. A pellicle beamsplitter refers to a beamsplitter comprising a thin planar membrane, such as a nitrocellulose membrane. The membrane can be on the order of millimetres to microns in thickness. In some examples, the pellicle beamsplitter is selected based on a wavelength of the transmitted and/or received beam. For example, a pellicle beamsplitter may exhibit transmission and reflection properties dependent upon the wavelength of light propagating through the pellicle beamsplitter and the thickness of the pellicle beamsplitter.

Optionally, an optical interface of the first or second optical component is arranged at a focal point of the optical element. This can facilitate improved coupling of a received beam into an optical interface, or can facilitate collimation to a collimated beam for a transmitted beam, for example. The focal point of the optical element is at a focal distance away from the optical element.

Optionally, the optical interface is an optical fibre coupling stage, the respective first or second optical component optically addressable through an optical fibre. Optical fibre can provide a stable optical arrangement as light is transmitted through guided modes of the optical fibre compared with free-space transmission which can be more susceptible to perturbations of optical components used for beam steering, for example.

Optionally, the first component is configured to transmit the first transmitted beam, wherein the first component is an optical source configured to produce an optical signal transmittable as the first transmitted beam. The optical source may produce an optical signal as a transmitted beam directly, for example being a laser producing a beam directly into free space, but in other examples may be a fibre laser and produce an optical signal into an optical fibre guided mode, which thereafter is transmitted as a transmitted beam, for example.

Optionally, the first arm is also configured to utilise the first received beam, the first arm further comprising an optical receiver configured to receive data encoded in the first received beam. The optical receiver converts data optically encoded in a received beam to electrical signals encoding the received data, for example.

Optionally, the transmitted beam and the received beam are colinear and address a common optical port of the first arm. This means the FSO terminal can be considered to be monostatic. This can reduce size and weight of the FSO terminal, as a spatial footprint of the terminal can be reduced, and receiver portions and transmitter portions can share beam steering components, for example, compared with FSO terminals having separate receiver and transmitter portions.

Optionally, the first arm comprises an optical fibre architecture, such that the optical source, optical receiver and an optical interface for the first arm are coupled by optical fibres to a fibre optic circulator. An optical fibre architecture can be more robust to mechanical perturbations since light is guided in the optical fibre and so a risk of misalignment of optical source and optical receiver is reduced, for example.

Optionally, the second component is configured to utilise the second received beam, wherein the second component comprises a first beam position tracking detector. The first beam position tracking detector may be a quadrant detector.

Optionally, the free-space optical communications terminal comprises: a fourth arm addressing a fourth port of the beamsplitter, the fourth arm comprising a second beam position tracking detector; and a third optical path from the optical source of the first arm to the second beam position tracking detector via the beamsplitter. The second beam position tracking detector may be a quadrant detector.

The second beam position tracking detector can be used for comparison with the first beam position tracking detector. The first beam position tracking detector detects changes in beam position which can arise from (i) changes in a received beam from a target and (ii) movement of the beamsplitter. Changes in the received beam may arise from change in position of the target relative to the FSO terminal, for example. Movement of the beamsplitter may arise from vibrations in the beamsplitter, for example. The second beam position tracking detector can detect changes in beam position arising just from (ii), that is, movements of the beam splitter, since it receives a beam from the optical source rather than the target. Accordingly, information from the second beam position tracking detector can be used to compensate for movement of the beamsplitter and/or more accurately characterise changes to the received beam from the target. In particular, a received beam transmitted through the beamsplitter from the third arm to the first arm may not be prone to disturbances from movement of the beamsplitter in the same manner as a received beam being reflected from the beamsplitter from the third arm to the second arm. Tracking the beam position in the presence of beamsplitter movement can therefore provide inaccurate information about behaviour of the beam received in the first arm. By characterising the movement of the beamsplitter using the second beam position detector and accounting for this movement in the control of the pointing unit, more accurate control of the beam received in the first arm can be achieved.

Optionally, the second beam position tracking detector is operable to output second beam position data, and the FSO terminal comprises a controller configured to determine perturbation data indicative of movement of the beamsplitter based on the second beam position data. The perturbation data can be used to monitor strength or predicted strength of an optical communications link by indicating, for example, when a communication link is likely to have reduced quality due to relatively larger movement of the beamsplitter, for example. This can allow communications to be paused until beamsplitter movement returns below a threshold level, for example. The perturbation data may be calculated by comparing the second beam position data with a reference position which is indicative of the position of the second beam at the second beam position tracking detector in the absence of perturbation of the beamsplitter, for example.

Optionally, the first beam position tracking detector is operable to output first beam position data, and the controller is configured to: determine compensated first beam position data based on the perturbation data and the first beam position data, and control the pointing unit to steer the received beam to the first arm based on the compensated first beam position data. As described above, the received beam at the first beam position tracking detector, which is reflected by the beamsplitter, is affected by both movement of the received beam and by perturbations of the beamsplitter. The received beam which passes through the beamsplitter to the first arm is not affected, or only minimally affected, by beamsplitter perturbations. Accordingly, to use the first beam position tracking detector to accurately steer the received beam into the first arm, it is desirable to remove the effects of beamsplitter perturbations from the first beam position data. By using the second beam position tracking detector to calculate perturbation data, the first beam position data can be subsequently corrected using the perturbation data to form compensated first beam position data. The compensated first beam position data can more effectively describe the position of the received beam in the first arm, since the impact of beamsplitter perturbations have been removed.

The first beam position data may be represented by a vector which is a spatial coordinate from the origin of the beam position tracking detector, for instance. The perturbation data may be another vector which represents an adjustment to this spatial coordinate which removes the effect of beamsplitter perturbation. The compensated first beam position data can therefore be another set of spatial coordinates which describes a position of the received beam in the first arm, and upon which control of the pointing unit can be based. The skilled person will appreciate that a vector representation is merely an example, and that there are other methods of representing this information. Control of the pointing unit may be performed directly, wherein the controller outputs commands directly to optical elements of the pointing unit, or indirectly, wherein the controller outputs steering data to the pointing unit, for example to a processor of the pointing unit, whereupon the pointing unit controls constituent optical elements as required.

Optionally, the FSO terminal is configured as follows: the first component is an optical source and the first arm further comprises an optical receiver, the first arm being configured to transmit a transmitted beam and receive a received beam; the second component is a first beam position tracking detector, the second arm being configured to receive a received beam, the first beam position tracking detector operable to output first beam position data; the beamsplitter is a pellicle beamsplitter; and the free-space optical communications terminal further comprises a fourth arm addressing a fourth port of the beamsplitter, the fourth arm comprising a second beam position tracking detector, a third optical path from the optical source of the first arm to the beam position tracking detector of the fourth arm via the beamsplitter, the second beam position tracking detector operable to output second beam position data; the FSO terminal comprising a controller configured to determine perturbation data indicative of movement of the beamsplitter based on the second beam position data, determine compensated first beam position data based on the perturbation data and the first beam position data, and to control the pointing unit based on the compensated first beam position data.

A pellicle beamsplitter, as described above, may be particularly suited to operation with converging and diverging beams since it can cause reduced or negligible aberration to such a beam compared with e.g. bulk beamsplitters. However, it can be more prone to movement, or perturbations, introduced by pressure waves in the air and the like. These perturbations may be particularly prevalent when mounted on a moving vehicle such as an aircraft or ground vehicle such as a car. Accordingly, as described previously, the second beam position tracking detector can be used to detect such movement of the pellicle beam splitter. Influence of movement of the pellicle beam splitter on tracking of a received beam by the first beam position tracking detector can be compensated for, therefore, such that changes in the received beam due to changes in the position of the target can be distinguished from changes in the received beam due to movement of the pellicle beamsplitter, for example. This can facilitate more accurate steering of the received beam which can improve optical coupling, and can thereby improve data transmission rates or the like, improving performance of the FSO terminal. This can also facilitate more accurate steering of a transmitted beam, such that a target is reached more accurately by the transmitted beam, to similarly improve performance of the FSO terminal.

A second aspect of the present invention provides a vehicle comprising the free-space optical communications terminal according to the first aspect. Since the FSO terminal of the first aspect can have a reduced weight and/or size, the vehicle can similarly benefit from reduced weight and/or size. This can improve fuel efficiency, for example, by reducing weight of the vehicle overall, or facilitate a more efficient shape such as a more aerodynamic or hydrodynamic shape, for example. As described above, FSO terminals mounted to vehicles may be more prone to vibrations which can impact handling of beams through the terminal. In examples of terminals of the first aspect comprising the controller arranged to compensate for movement of the beamsplitter, and in particular a pellicle beamsplitter, such handling can be improved.

Optionally, the vehicle is an aircraft or spacecraft. In some examples, the vehicle is a ground vehicle such as a car.

A third aspect of the present invention provides a method of beam steering in a free-space optical communications terminal. The method comprises receiving a received beam from a target at a pointing unit, providing the received beam to a beamsplitter and tracking a position of at least a portion of the received beam having passed through the beamsplitter, producing a transmitted beam, transmitting the transmitted beam through the beamsplitter and tracking a position of at least a portion of the transmitted beam having passed through the beamsplitter, determining perturbation data indicative of a movement of the beamsplitter based on the position of the transmitted beam, determining a compensated position of the received beam based on the perturbation data and the position of the received beam, and controlling the pointing unit to steer the received beam based on the compensated position of the received beam.

As described with reference to the first aspect, the method of the third aspect can facilitate improved operation of the FSO terminal by facilitating movement of a beamsplitter to be characterised, and steering adjusted to compensate for this movement. This can improve optical coupling which can improve data transmission rates, for example.

Optionally, the beamsplitter is a pellicle beamsplitter and the perturbation data is indicative of vibrations in the pellicle beamsplitter.

Optionally, the received beam is provided to the beamsplitter as a converging beam, and the transmitted beam is provided to the beamsplitter as a diverging beam.

Optional features of any one of the aspects of the present invention may be applied equally to any other one of the aspects of the present invention, where appropriate.

### BRIEF DESCRIPTION OF THE DRAWINGS

Embodiments of the invention will now be described, by way of example only, with reference to the accompanying drawings, in which:
Figure 1 shows a schematic view of a known free-space optical communications (FSO) terminal.
Figure 2 shows a schematic view of an FSO terminal according to an example of the present disclosure;
Figure 3 shows a schematic view of an FSO terminal according to a further example of the present disclosure;
Figure 4 illustrates an aircraft equipped with an FSO terminal according to the present disclosure, according to an example;
Figure 5 illustrates steps of a method for beam steering according to the present disclosure, according to an example; and
Figure 6 illustrates schematically the formation of compensated beam position data in the method of Figure 5.

### DETAILED DESCRIPTION

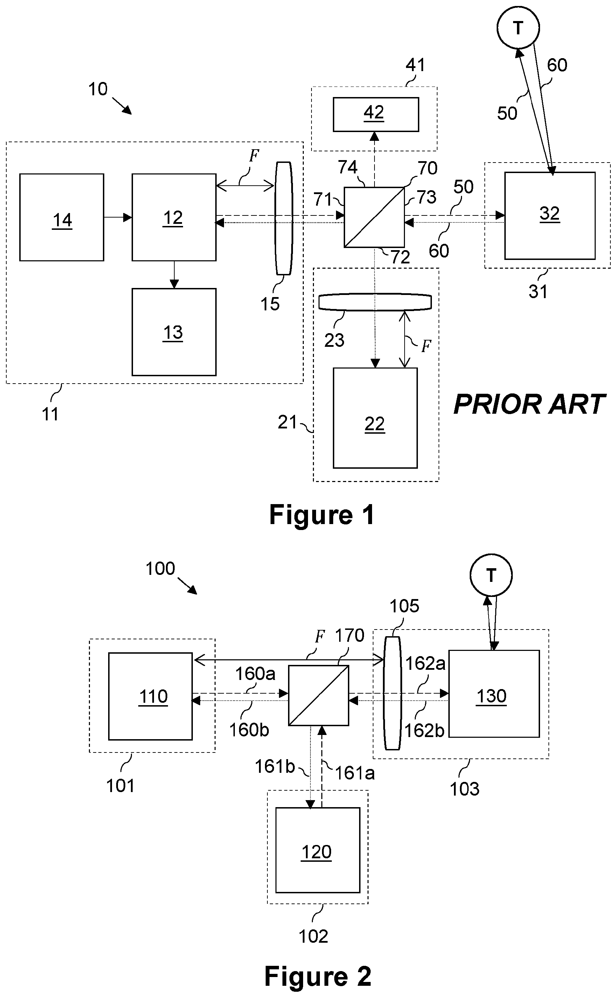

An exemplary known free-space optical (FSO) communications terminal 10 is illustrated by Figure 1 to provide a point of comparison with the present disclosure. The FSO terminal 10 has a first arm 11 which is a combined transmit-receive system formed of an optical source 14 and an optical receiver 13 optically coupled to an optical interface 12. A second arm 21 includes a beam position tracking sensor 22. A third arm 31 includes a pointing unit 32. A fourth arm 41 includes a beam dump 42. A beamsplitter 70 having four ports 71, 72, 73, 74 is configured to address the four arms 11, 21, 31, 41. The first arm 11 addresses a first port 71 of the beamsplitter 70; the second arm 21 addresses the second port 72 of the beamsplitter 70; the third arm 31 addresses the third port 73 of the beamsplitter 70; and the fourth arm 41 addresses the fourth port 74 of the beamsplitter 70.

Considering transmit functions of the FSO terminal 10, an optical signal, typically encoding data to be communicated to an external target T, is generated by the optical source 14 and emerges from the optical interface 12 as a transmitted beam 50. The transmitted beam 50 propagates from the optical interface 12 to the first port 71 of the beamsplitter 70. A portion of the transmitted beam 50 may be reflected (dependent on the precise optical arrangement) by the beamsplitter 70 to the fourth arm 41 via the fourth port 74, whereupon the portion of the transmitted beam 50 is absorbed by the beam dump 42. A remainder of the transmitted beam 50 exits the third port 73 of the beamsplitter 70 and propagates to the pointing unit 32. The pointing unit 32 is operable to steer the transmitted beam 50 towards the external target T and steer a received beam 60 from the target T, functions which are described in more detail hereafter.

Considering the receive functions of the FSO terminal 10, a received beam 60 produced by the target T is received at the pointing unit 32 and steered to the third port 73 of the beamsplitter 70. A portion of the received beam 60 is provided to the second arm 21 and specifically to the beam position tracking detector 22. A remaining portion of the received beam 60 is provided to the first arm 11, where it is received by the optical interface 12 and sent to the optical receiver 13. The position of the received beam 60 is measured by the beam position tracking detector 22 and can be used to adjust steering of the received beam 60; for example, if the beam position tracking detector 22 detects that the received beam 60 is off-centre, the pointing unit 32 and/or other optical elements may be adjusted to return the received beam to a central position. Furthermore, the beam position tracking detector 22 can indicate an angle of incidence of the received beam 60, which is indicative of a position of the target T relative to the FSO terminal 10.

Typically, the transmitted beam 50 will emerge from the optical interface 12 of the first arm 11 as a diverging beam. However, it is preferrable to collimate the beam, especially for long range transmission, in order to keep the power concentrated in a finite space for subsequent coupling into an optical receiver at the target. A first lens 15 is therefore provided in the first arm 11, between the optical interface 12 and the beamsplitter 70, in order to collimate the transmitted beam 50. The transmitted beam 50 then progresses from the first lens 15, through the beamsplitter 70, to the pointing unit 32 and is subsequently transmitted to the target T as a collimated beam. Similarly, the received beam 60 is in a collimated form when received by the FSO terminal 10. In order to effectively measure the position of the received beam 60, a second lens 23 is provided in the second arm 23, between the beamsplitter 70 and the beam position tracking detector 22, to focus the received beam 60 onto the beam position tracking detector 22. The first lens 15 also functions to focus the received beam 60 onto the optical interface 12 of the first arm 11. Each of the first lens 15 and the second lens 23 are positioned at a focal distance F away from the optical interface 12 and beam position tracking detector 22, respectively. This focal length F limits the compactness of the FSO terminal 10.

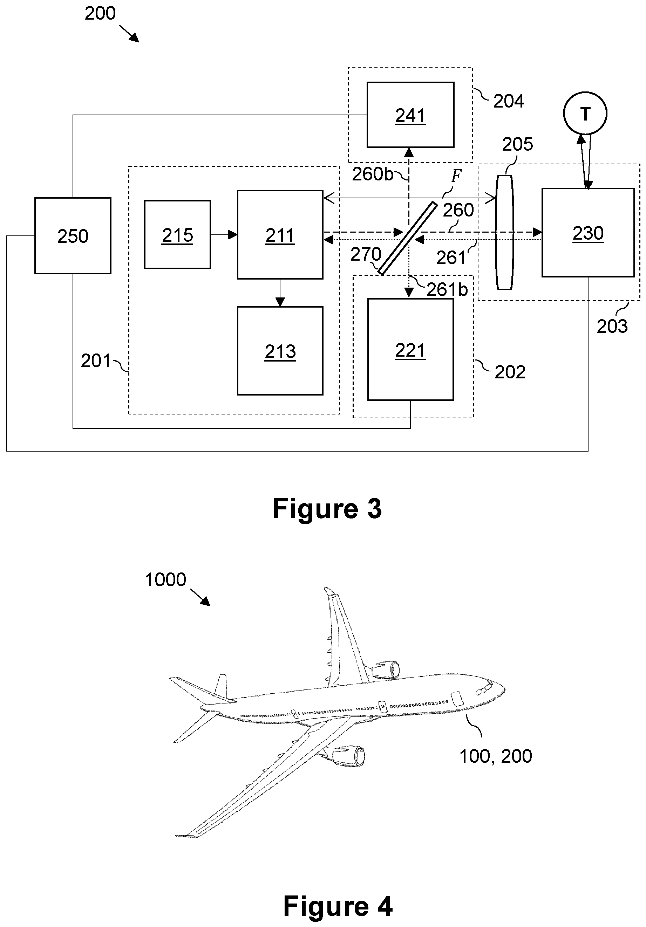

Figure 2 illustrates an FSO terminal 100 having an optical architecture in accordance with the present disclosure; Figure 3 illustrates an FSO terminal 200 based on this optical architecture.

The FSO terminal 100 of Figure 2 comprises a first arm 101 with a first component 110, and a second arm 102 with a second component 120. The first component 110 and second component 120 are each operable to transmit a beam 160a, 161a and/or utilise a received beam 160b, 161b. A third arm 103 comprises a pointing unit 130 for steering beams to and/or from a target T. In this example, the pointing unit 130 is a fast steering mirror, but the skilled person will appreciate that other systems can be used additionally or alternatively, such as a Risley prism scanner, or non-mechanical beam steering system formed of electronically-controllable metamaterial-based beam steering elements. A beamsplitter 170 optically couples the first arm 101 to the pointing unit 130, and optically couples the second arm 102 to the pointing unit 130. A lens 105 is provided in the third arm 103, between the pointing unit 130 and the beamsplitter 170. The lens 105 is operable to focus or collimate a beam.

When, for example, the first component 110 is operable to transmit a beam, the transmitted beam emerges from the first arm 101 as a diverging beam 160a. The diverging beam 160a travels through the beamsplitter 170 and is provided to the third arm 103. The lens 105 then collimates the diverging transmitted beam 160a to form a collimated transmitted beam 162a. The collimated transmitted beam 162a is steered to the target T by the pointing unit 130. A second diverging transmitted beam 161a from the second component 120 can be handled in a similar way: the second diverging transmitted beam 161a is transmitted from the second component 120, travels through the beamsplitter 170 and is reflected by the beamsplitter 170 to be provided to the third arm 103. The lens 105 then collimates the second diverging transmitted beam 161a and provides this collimated beam (not shown) to the pointing unit 130 for onward transmission to the target T.

When, for example, the first component 110 is operable to utilise a received beam, a collimated beam 162b which is received by the pointing unit 130 can be focussed by the lens 105. A converging received beam 160b, focussed by the lens 105, travels through the beamsplitter 170 and is received at the first component 110. Similarly, a converging received beam 161b can be provided to the second component 120: a second received beam which is received by the pointing unit 130 is focussed by the lens 105 and is reflected by the beamsplitter 170 to the second component 120 of the second arm 102. Additionally or alternatively, the beamsplitter 170 may apportion the received collimated beam 162 between the first 101 and second arm 102, the lens 105 focussing the apportioned beam into each of the arms.

The lens 105, in being positioned in the third arm, thereby combines the roles of the first lens 15 and the second lens 23 to provide collimating and focussing functions for both the first arm 101 and the second arm 102. This can be useful in a way which is agnostic to whether the first and/or second component are respectively configured to transmit or receive a beam, or both.

In particular, assuming that the focal length F of the lens 105 is the same as the first and second lenses 15, 23 of Figure 1, the terminal 100 of Figure 2 can be more compact because the focal length F spans between the third arm and the first/second arms and spans through the beamsplitter.

Figure 3 illustrates an FSO terminal 200 according to the present disclosure which is an example of the optical architecture of the FSO terminal 100 of Figure 2.

A first arm 201 comprises an optical source 215 and an optical receiver 213 coupled to an optical interface 211. The first arm 201 has an optical fibre architecture, with the optical interface 211 being a fibre-coupling stage connected to the optical source 215 and optical receiver 213 by an optical circulator. A second arm 202 comprises a primary beam position tracking detector 221. A third arm 203 comprises a pointing unit 230 and a lens 205. A fourth arm 204 comprises an auxiliary beam position tracking detector 241.

Similarly to the FSO terminal of Figure 1, the four arms 201, 202, 203, 204 are optically coupled together by a beamsplitter 270, each arm addressing a respective port of the beamsplitter 270. In the example of Figure 3, however, the beamsplitter is a pellicle beamsplitter 270, which, relative to a beamsplitter cube, for instance, is thinner and substantially planar, such as being microns to millimetres in thickness (normal to the plane, in the direction of beam propagation) and typically formed of a nitrocellulose membrane.

Generally, the FSO terminal 200 operates in a similar manner to that described for the FSO terminal 100 of Figure 2. The lens 205 of the third arm 203 provides a converging received beam 261 through the pellicle beamsplitter 270 to the first arm 201 and second arm 202, whereupon the received beam can be received by the optical receiver 213 and the primary beam position tracking detector 221. Similarly, a diverging transmitted beam 260 is provided from the optical source 215 of the first arm 201 and collimated by the lens 205 of the third arm 203, whereupon it can be steered by the pointing unit 230 to a target T.

Because the beams passing through the pellicle beamsplitter 270 are diverging and converging, they are more prone to aberrations such as spherical aberration. This is because different parts of the beam experience different thicknesses of material due to the beam not being incident perpendicularly on the beamsplitter. A pellicle beamsplitter 270, in being optically thin, can thereby reduce or remove these aberrations, improving beam quality, and which in turn can improve coupling of the beams, especially when compared with bulk cube beamsplitters, for example.

However, since pellicle beamsplitters 270 are relatively thin, they can be more prone to perturbations which arise from pressure wave vibrations in the air, underlying vibrations through a structure upon which the FSO terminal 200 is mounted, and the like. The perturbations in the beamsplitter can introduce deflections to the received beam 261, for example, a portion 261b of the received beam 261 being received at the primary beam position detector 221. The primary beam position detector 221 detects these deflections of the received beam 261b which can be mistaken as originating from movement of the target T from which the received beam 261 originates. To decouple the effects of perturbations of the beamsplitter 270 from the movement of the target T, the auxiliary beam position tracking detector 241 in the fourth arm 204 can be used. The auxiliary beam position tracking detector 241 receives a portion 260b of a transmitted beam 260, produced by the optical source 215. The transmitted beam 260 is not subject to movement of the target T, and so changes in position of the transmitted beam 260 detected by the auxiliary beam position tacking detector 241 originate from the perturbations of the pellicle beamsplitter 270. This allows perturbations of the pellicle beamsplitter 270 to be characterised.

The FSO terminal 200 is equipped with a controller 250 which is, generally, operable to perform processing. The controller 250 may be embodied by a variety of options such as a localised processing device such as a general-purpose processor, an FPGA, or an ASIC, for example, or a distributed computing system such as a cloud computing system, for example. The controller 250 may be realised by a plurality of processing devices which may cooperate with one another. The controller 250 can send and receive data by wired or wireless connection, for example, not limited to fibre-optic or electrical connection, WiFi, Bluetooth, and the like.

The primary beam position tracking detector 221 and the auxiliary beam position tracking detector 241 are each operable to output beam position data indicative of a respective beam position detected by the respective detector. First beam position data, output by the primary beam position tracking detector 221, and second beam position data, output by the auxiliary beam position tracking detector 241, are each received by the controller 250. Each beam position data may, for example, take the form of a set of values describing spatial coordinates in correspondence with intensity information which describes the spatial position of the respective beam detected by the beam position tracking detector. In some examples, the beam position tracking data may average such information to, for example, describe the beam position using a single spatial coordinate which represents a position of a beam centre, which may reduce data size of the beam position data and which may be more suitable for use in high-speed applications, for example.

The controller 250 can use the second beam position data to determine perturbation data. The perturbation data indicates how a beam incident on the beamsplitter is moved based on perturbation of the beamsplitter which may arise from, for example, pressure wave vibrations in the air which cause the pellicle beamsplitter 270 to oscillate, for instance. Determination of perturbation data involves comparison of the second beam position data with a reference position, such as a calibrated "zero-point" of the beam position tracking detector, which is where the detected beam by the auxiliary beam position tracking detector 241 is expected to be when there is no perturbation of the pellicle beamsplitter 270. That is, when the second beam position data is different to such a reference position, the second beam position data indicates that the beam has moved due to perturbation of the pellicle beamsplitter 270, and the difference between the second beam position data and the reference position characterises the perturbation.

Since the auxiliary beam position tracking detector 241 detects movement due to perturbations of the pellicle beamsplitter 270, and the primary beam position tracking detector 221 detects the combination of perturbations of the pellicle beamsplitter 270 and movement of the received beam 261 due to movement of the target T, perturbation data from the auxiliary beam position tracking detector can be used to compensate for the effects of perturbations of the pellicle beamsplitter 270 in the beam positions detected by the primary beam position tracking detector 221. The compensation can simply involve subtracting the perturbation data (e.g. a vector indicating the degree to which the beam has been perturbed by the movement of the pellicle beamsplitter 270) from the first beam position data, which indicates the overall position of the received beam 261b. This compensation produces compensated first beam position data, which is indicative of the position of the received beam 261 in the first arm 201. Using the compensated first beam position data can facilitate more effective formation of a communication link between the target T and the FSO terminal 200, by allowing the pointing unit 230 to be operated based on a more accurate calculated position of the received beam 261 in the first arm 201.

As part of this compensation, the controller 250 may perform a normalisation process to map perturbations detected by the auxiliary beam position tracking detector 241 into the reference frame of the primary beam position tracking detector 221; for example, since the transmitted beam and received beam are incident upon opposite sides of the pellicle beamsplitter 271, they may experience opposite perturbations. The normalisation process can account for this in calculating the compensated beam position.

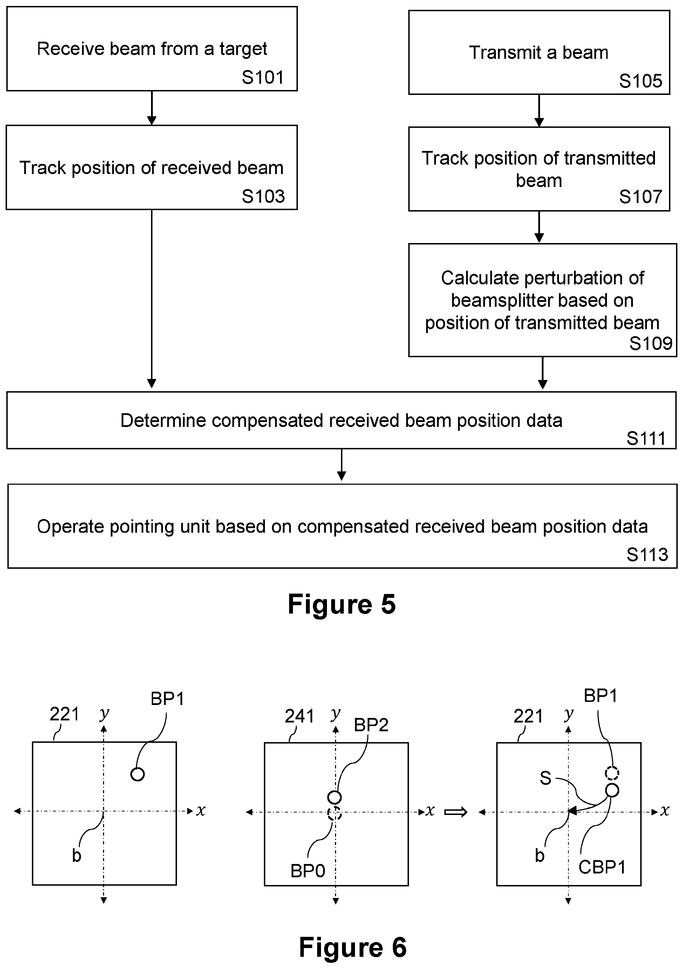

Figure 5 sets out steps of a beam steering method using an FSO terminal such as the FSO terminal 200 of Figure 3.

At item S101, a beam is received from a target. The target may be another FSO terminal in accordance with the present disclosure, or may be an FSO terminal which is altogether different from the FSO terminals 100, 200 described here.

At item S103, a position of the received beam is tracked. The tracking can be performed using a beam position tracking detector, such as a quadrant photodiode detector. In use of the FSO terminal 200, the primary beam position data is generated by the primary beam position tracking detector 221. As described above, the position of the received beam at the primary beam position tracking detector is determined by (i) the position of the target from which the received beam originates, and hence the angle of incidence upon the receiving terminal, and (ii) perturbations of the pellicle beamsplitter 270.

At item S105, a beam is transmitted. In use of the FSO terminal 200, the beam is transmitted from the first arm 201 through the pellicle beamsplitter 270. The beam may be a data beam encoding data for transmission to a target recipient; alternatively, the beam may simply be transmitted for the purpose of characterising movement of a beamsplitter, and encode no such information for communication.

At item S107, a position of the transmitted beam is tracked. In use of the FSO terminal 200, the auxiliary beam position data is generated by the auxiliary beam position tracking detector 241. As described above, the auxiliary beam position data is indicative of perturbations of the pellicle beamsplitter 270, since the transmitted beam is anticipated to have an otherwise fixed spatial relationship with the auxiliary beam position tracking detector 241 and any discrepancies in the position of the transmitted beam at the auxiliary beam position tracking detector 241 arises from movement of the pellicle beamsplitter.

At item S109, a perturbation of the beamsplitter is calculated based on the position of the transmitted beam. In use of the FSO terminal 200, the controller 250 uses the auxiliary beam position data to calculate this perturbation. This calculation may involve use of a calibrated "zero" position, which is a position of the transmitted beam in the absence of any perturbations of the pellicle beamsplitter 270, for example. At this step, comparison of the perturbation with a threshold value can be performed as a way of assessing a predicted quality of communications; for example, if large perturbations are measured, it can be inferred that received signal strength may suffer and communication may be paused or repeated based on the same.

At item S111, compensated received beam position data is determined. The compensated received beam position data is determined by adjusting the position of the received beam determined at item S103 with the perturbation data determined at item S109. As mentioned previously, the portion of the received beam which is passes through the beamsplitter to the first arm is subject to less disturbance arising from perturbation of the beamsplitter than the portion of the received beam which is reflected from the beamsplitter to the primary beam position tracking detector. Accordingly, the compensated received beam position data more accurately reflects the position of the received beam entering the first arm 201. This can mean the received beam being sent to the first arm can be more accurately steered, and better communications performance, such as higher data transmission rates, can be achieved.

At item S113, the pointing unit 230 is operated based on the compensated received beam position data. In particular, the pointing unit 230 is controlled to steer the received beam to couple the received beam to the optical receiver 213. In particular, for example, the beam is steered by the pointing unit 213 to maximise coupling of the received beam into the optical interface 12 of the first arm 101 by, for example, steering the received beam until the compensated received beam position data indicates that the received beam is in a predetermined target position which is known to generate optimal coupling. The pointing unit 230 may comprise mechanically controllable or non-mechanically controllable (such as electronically controllable) optical elements, and these may be interfaced with to perform beam steering, such as fine and/or coarse beam steering.

Items S105, S107, and S109 may occur concurrently with Items S101 and S103 to most accurately perform the above-mentioned compensation steps, or at least on the timescale of perturbations which impact the beamsplitter 270. For example, rapidly varying perturbations of the beamsplitter will benefit from similarly rapid updates to the perturbation data in order to properly compensate the beam position data.

Figure 6 illustrates, schematically, the aforementioned method of determining compensated received beam position data, according to an example. In this example, each beam position tracking detector 221, 241 uses a two-dimensional coordinate system (*x, y*) such that beam position detected by the detectors can be represented by a 2-valued vector (*xₐ, yₐ*)*.* The vector may represent a centroid of the received beam, calculated by averaging an intensity profile of the received beam, for example. Primary beam position tracking detector 221 detects a beam position BP1, (*x*₁*, y*₁)*,* of the received beam 261b, which has arisen from (i) the angle of incidence of the received beam from the target and (ii) perturbation of the pellicle beamsplitter 270. It is desirable for the received beam 261b to be located at a position *b,* (*x_{b}, y_{b}*), to maximise coupling of the received beam 261 into the first arm 201. In this example, b = (0, 0), but in other examples could be some other position which produces maximal (or at least sufficient) coupling of the received beam 261 into the first arm 201. At the same time, the auxiliary beam position tracking detector 241 detects a beam position BP2, (*x*₂*, y*₂), of the transmitted beam 260b which has been subject to perturbation of the pellicle beamsplitter 270. The auxiliary beam position tracking detector 241 has a calibrated zero-point BP0, (*x_{c}, y_{c}*)*,* also (0, 0) in this example but may be different in different examples, which is a beam position of the transmitted beam 260b when no perturbations are present. From this, a difference between BP2 and BP0 can be calculated to determine perturbation data Δ, Δ = (*x*₂ - *x_{c}, y*₂ *- y_{c}*), which is indicative of the effect on beam position arising from the pellicle beamsplitter 270 perturbations. The perturbation data Δ can then be used to correct BP1 to compensated beam position data CBP1, *CBP1 = BP1 -* Δ *=* (*x*₁ *-* (*x*₂ *- x_{c}*)*, y*₁ *-* (*y*₂ *- y_{c}*)) , which more accurately describes the position of the received beam 261 in the first arm 201. The pointing unit can then implement steering *S* to steer the received beam 261 from its compensated beam position CBP1 to position b and thereby maximise coupling of the received beam 261 to the first arm 201.

In some examples, calculation of the compensated received beam position data may be simplified. For example, the primary 221 and auxiliary beam position tracking detectors 241 can be arranged relative to the pellicle beamsplitter 270 such that a given perturbation of the beamsplitter results in a same displacement of the respective beam in both. This can be achieved by, for example, using primary and auxiliary beam position tracking detectors having a same detection grid size and placing them equidistantly from the pellicle beamsplitter 271. If the auxiliary beam position detector 241 and the primary beam position detector 221 operate using a common coordinate system, and a reference point of the auxiliary beam position detector 241 has a value of (0, 0) in this coordinate system, then calculation of the compensated received beam position data may simply involve subtracting the second beam position data from the first beam position data, since the second beam position data inherently characterises the beamsplitter perturbations. That is, considering the 2-valued vector representation above, *BP0 =* (*x_{c}, y_{c}*) = 0, 0 and so Δ = *(x*₂ *-* 0, *y₂* - 0) = (*x₂, y*₂) *= BP2,* and *CBP1 = BP1 -* Δ *= BP1 - BP2 =* (*x*₁ - *x₂, y*₁ - *y*₂*).* In other words, in such an example, the perturbation data may be the same as or taken as the second beam position data. This approach of arranging symmetrical setups of the primary and auxiliary beam position tracking detectors may be useful in reducing the number of operations required to generate the compensated received beam position data, which may be particularly useful when it is desirable to calculate compensated data at high speeds.

**In** examples where this approach is not adopted, or otherwise, normalisation approaches can map between beam position data from the auxiliary beam position tracking detector and the primary beam position tracking detector by, for example, transforming a coordinate system of the auxiliary beam position tracking detector to a coordinate system of the primary auxiliary beam position tracking detector. Other examples may be used.

Figure 4 illustrates an aircraft 1000 which is equipped with an FSO terminal according to the present disclosure, such as FSO terminal 100 of Figure 2 or FSO terminal 200 of Figure 3. As described previously, the FSO terminal can have a smaller spatial footprint and weight which can in turn reduce size and weight of the aircraft 1000. The smaller spatial footprint and weight can also make the terminals 100, 200 more suited for retrofitting applications, as a greater range of aircraft may have space necessary to install the terminals 100, 200 without requiring e.g. modifications to the fuselage or the likes to create space to accommodate the terminals. The FSO terminal 100, 200 may be used by the aircraft 1000 to communicate to a ground terminal or to another aircraft, for example. In some examples, the aircraft 1000 may comprise multiple FSO terminals 100, 200 which operate as a communications network within the aircraft 1000 itself, communicating data from one part of the aircraft to another part of the aircraft.

Above embodiments are to be understood as illustrative examples of the invention.

In the above embodiments, there is provided a free-space optical communications (FSO) terminal comprising a beamsplitter having a first, second, and third port; a first arm addressing the first port of the beamsplitter and comprising a first component; a second arm addressing the second port of the beamsplitter and comprising a second component; a third arm addressing the third port of the beamsplitter and comprising a pointing unit configured to steer a transmitted beam to a target and/or a steer a received beam; a first optical path from the first component to the pointing unit via the beamsplitter, and a second optical path from the second component to the pointing unit via the beamsplitter; wherein the third arm comprises an optical element positioned along the first and second optical paths, the optical element configured to collimate a diverging transmitted beam incident thereupon so as to provide a collimated transmitted beam to the pointing unit, and/or focus a received beam from the pointing unit so as to provide a converging beam to the first arm and/or second arm.

In particular, the first arm comprises components configured to transmit a diverging transmitted beam and utilise a first received converging beam; the second arm comprises a component configured to utilise a second received converging beam; the pointing unit is configured to steer a transmitted beam to a target, and steer a received beam to the first and second arms; and the optical element is configured to collimate the diverging transmitted beam incident thereupon so as to provide a collimated transmitted beam to the pointing unit for transmission to the target, and focus the received beam from the pointing unit so as to provide a converging beam to the first arm as the first received converging beam and to the second arm as the second received converging beam.

Further embodiments of the invention are envisaged:

For example, the terminals described above may be used in vehicles other than aircraft, such as spacecraft, or ground vehicles such as cars. The terminal may be used on ground structures.

The optical element for focussing or diverging incident beams need not be a bulk optic lens, and may be a spatial light modulator or metamaterial lens, for instance. The optical element may therefore have an adjustable focal length, for example.

The received beam in the first and/or second arm need not come to a focus, and so the focal length from the optical element may be beyond a respective optical interface of the first and/or second arm, in the direction of propagation of the received beam. For instance, it may be preferable for a particular function to have the beam converge but not necessarily brought to a focal point, for example.

It is be understood that any feature described in relation to any one embodiment may be used alone, or in combination with other features described, and may also be used in combination with one or more features of any other of the embodiments, or any combination of any other embodiments. Furthermore, equivalents and modifications not described above may also be employed without departing from the scope of the invention, which is defined in the accompanying claims.

It is to be noted that the term "or" as used herein is to be interpreted to mean "and/or", unless expressly stated otherwise.

## Claims

1. A free-space optical communications (FSO) terminal comprising:
a beamsplitter having a first, second, and third port,
a first arm addressing the first port of the beamsplitter and comprising a first component configured to transmit a diverging first transmitted beam and/or utilise a first received beam,
a second arm addressing the second port of the beamsplitter and comprising a second component configured to transmit a diverging second transmitted beam and/or utilise a second received beam, and
a third arm addressing the third port of the beamsplitter and comprising a pointing unit configured to steer the first and/or second transmitted beam to a target and/or the first and/or second received beam received from the target;
a first optical path from the first component to the pointing unit via the beamsplitter, and a second optical path from the second component to the pointing unit via the beamsplitter;
wherein the third arm comprises an optical element positioned along the first and second optical paths, the optical element configured to:
collimate the diverging first transmitted beam and/or the diverging second transmitted beam incident thereupon so as to provide a collimated transmitted beam to the pointing unit, and
focus the first and/or second received beam from the pointing unit so as to provide a converging beam to the first arm and/or second arm.

2. The FSO terminal according to claim 1, wherein the beamsplitter is substantially planar.

3. The FSO terminal according to claim 2, wherein the beamsplitter is a pellicle beamsplitter.

4. The FSO terminal according to any one of the preceding claims, wherein an optical interface of the first or second optical component is arranged at a focal point of the optical element, optionally wherein the optical interface is an optical fibre coupling stage, the respective first or second optical component optically addressable through an optical fibre.

5. The FSO terminal according to any one of the preceding claims, wherein the first component is configured to transmit the first transmitted beam, wherein the first component is an optical source configured to produce an optical signal transmittable as the first transmitted beam.

6. The FSO terminal according to claim 5, wherein the first arm is also configured to utilise the first received beam, the first arm further comprising an optical receiver configured to receive data encoded in the first received beam.

7. The FSO terminal of claim 6, wherein the first transmitted beam and the first received beam are colinear and address a common optical port of the first arm, optionally wherein the first arm comprises an optical fibre architecture, such that the optical source, optical receiver and an optical interface for the first arm are coupled by optical fibre(s) to a fibre optic circulator.

8. The FSO terminal of any one of claims 5 to 7, wherein the second component is configured to utilise the second received beam, wherein the second component comprises a first beam position tracking detector.

9. The FSO terminal of claim 8, wherein the free-space optical communications terminal comprises: a fourth arm addressing a fourth port of the beamsplitter, the fourth arm comprising a second beam position tracking detector; and a third optical path from the optical source of the first arm to the second beam position tracking detector via the beamsplitter.

10. The FSO terminal according to claim 9, wherein
the second beam position tracking detector is operable to output second beam position data, and
the FSO terminal comprises a controller configured to determine perturbation data indicative of movement of the beamsplitter based on the second beam position data.

11. The FSO terminal according to claim 10, wherein
the first beam position tracking detector is operable to output first beam position data, and
the controller is configured to:
determine compensated first beam position data based on the perturbation data and the first beam position data, and
control the pointing unit to steer the received beam to the first arm based on the compensated first beam position data.

12. An FSO terminal according to claim 1, wherein
the first component is an optical source and the first arm further comprises an optical receiver, the first arm being configured to transmit a transmitted beam and receive a received beam;
the second component is a first beam position tracking detector, the second arm being configured to receive a received beam, the first beam position tracking detector operable to output first beam position data;
the beamsplitter is a pellicle beamsplitter; and
the free-space optical communications terminal further comprises a fourth arm addressing a fourth port of the beamsplitter, the fourth arm comprising a second beam position tracking detector, a third optical path from the optical source of the first arm to the beam position tracking detector of the fourth arm via the beamsplitter, the second beam position tracking detector operable to output second beam position data;
the FSO terminal comprising a controller configured to
determine perturbation data indicative of movement of the beamsplitter based on the second beam position data,
determine compensated first beam position data based on the perturbation data and the first beam position data, and
to control the pointing unit based on the compensated first beam position data.

13. A vehicle comprising the free-space optical communications (FSO) terminal according to any previous claim, optionally wherein the vehicle is an aircraft or spacecraft.

14. A method of beam steering in a free-space optical communications (FSO) terminal comprising:
receiving a received beam from a target at a pointing unit,
providing the received beam to a beamsplitter and tracking a position of at least a portion of the received beam having passed through the beamsplitter,
producing a transmitted beam,
transmitting the transmitted beam through the beamsplitter and tracking a position of at least a portion of the transmitted beam having passed through the beamsplitter,
determining perturbation data indicative a movement of the beamsplitter based on the position of the transmitted beam,
determining a compensated position of the received beam based on the perturbation data and the position of the received beam, and
controlling the pointing unit to steer the received beam based on the compensated position of the received beam.

15. The method of claim 14, wherein the beamsplitter is a pellicle beamsplitter and the movement of the beamsplitter comprises vibrations in the pellicle beamsplitter; and/or wherein the received beam is provided to the beamsplitter as a converging beam, and the transmitted beam is provided to the beamsplitter as a diverging beam.
